**Europäisches Patentamt**

**European Patent Office**

**Office européen des brevets**

(11) Veröffentlichungsnummer: **0 248 918**
**A1**

## (12) EUROPÄISCHE PATENTANMELDUNG

(21) Anmeldenummer: **86107784.0**

(22) Anmeldetag: **07.06.86**

(51) Int. Cl.⁴: **B32B 18/00** , F16L 59/02 , F27D 1/00 , //C04B35/52

(43) Veröffentlichungstag der Anmeldung:
**16.12.87 Patentblatt 87/51**

(84) Benannte Vertragsstaaten:
**DE FR GB IT SE**

(71) Anmelder: **SIGRI GmbH**
**Werner-von-Siemens-Strasse 18**
**D-8901 Meitingen(DE)**

(72) Erfinder: **Vogelsang, Jörg, Dipl.-Ing. Dr.**
**Pfänderstrasse 13**
**D-8901 Meitingen-Ostendorf(DE)**

(54) **Wärmeisolierung.**

(57) Wärmeisolierung, besonders für Hochtemperaturöfen, mit einer Isolierschicht aus Kohlenstoffilz und einer mit der Schicht verklebten Graphitfolie, die mit einer Vielzahl Durchbrechungen versehen ist.

## Wärmeisolierung

Gegenstand der Erfindung ist eine Wärmeisolierung für die Verwendung in einer nicht-toxidierenden Atmosphäre mit mindestens einer aus Kohlenstoffasern gebildeten Isolierschicht und einer fest mit der Isolierschicht verbundenen Graphitfolie.

Als Wärmeisolierung von Öfen, zur Isolierung von Rohren, Behältern und dgl., die im Kontakt mit heißen Gasen oder Schmelzen stehen, sind Isolierschichten aus Kohlenstoffilz, z.B. in Form von Filzbahnen, bekanntgeworden. Kohlenstoffilze erhält man beispielsweise durch Carbonisieren von Filzen aus Cellulose-, Pech-oder Polyacrylnitrilfasern. Wegen der vergleichsweise schlechten Oxidationsbeständigkeit der Kohlenstoffilze ist ihre Verwendung auf Öfen und Vorrichtungen begrenzt, die in einer nichtoxidierenden Atmosphäre oder im Vakuum arbeiten bzw. betrieben werden. Bei sehr hohen Temperaturen nimmt der Wärmewiderstand poröser Filzschichten beträchtlich ab, da der Anteil der durch Strahlung übertragenen Energie wächst. Es ist deshalb vorgeschlagen worden, aus Filzschichten gebildete Wärmeisolierungen mit Wärme-oder Strahlungsschilden aus Graphitfolie zu versehen (DE-PS 1 814 052). Die flexiblen Folien werden zweckmäßig mit einem Klebstoff mit der Isolierschicht verbunden, der bei der Betriebstemperatur als temperaturbeständiger Koks vorliegt. Derartige aus einer faserporösen Schicht und einer mit der Schicht verbundenen im wesentlichen gegen Gase impermeablen Folie bestehende Wärmeisolierungen lassen sich bei Temperaturen bis über 3000 °C mit Vorteil verwenden. Durch die DE-PS 28 53 397 ist schließlich ein Wärmeisolationsmaterial bekannt, das aus einer Schicht Kohlenstoffilz mit einer Rohdichte von 0,13 bis 0,20 g/cm³ und einer mit der Filzschicht verbundenen gasundurchlässigen Graphitfolie besteht. Die Graphitfolie hat bei dieser Wärmeisolierung die Aufgabe, die Filzschicht mechanisch zu schützen und zu versiegeln, vor allem um Verluste durch Abrieb und dgl., die gegebenenfalls auch den Ofenraum verunreinigen können, zu vermeiden.

Ein Nachteil der bekannten, eine Isolierschicht aus Kohlenstoffilz und eine die Filzschicht - schützende und zugleich die Strahlungsreflexion verbessernde Graphitfolie enthaltende Wärmeisolierung ist das häufige Lockern der Verbindung zwischen Graphitfolie und Filzschicht, die ausgehend von lokalen blasenartigen Aufwölbungen der Folie bis zu deren vollständiger Ablösung gehen kann. Ursache dieses Effekts ist im wesentlichen die Freisetzung gasförmiger Verbindungen aus der Folie. Graphitfolien stellt man aus expandiertem Graphit her, der durch thermische Zersetzung von Graphiteinlagerungsverbindungen, z.B. Graphithydrogensulfat, erhalten wird. Im Graphit zurückgebliebene Reste der Einlagerungsverbindungen werden bei höheren Temperaturen emittiert und beeinträchtigen bereits in kleinen Mengen die Festigkeit der Verbindung Isolierschicht/Folie. Zu einem kleineren Teil tragen auch gasförmige Pyrolyseprodukte, die sich in der Klebeschicht zwischen Folie und Filz bei hohen Temperaturen bilden, zur Ablösung der Folie von der Filzschicht oder -bähn bei. Prinzipiell kann man die schädliche Gasentwicklung durch längeres Erhitzen der verschiedenen Komponenten der Wärmeisolierung auf höhere Temperaturen vermeiden. Die Komponenten werden nach der Wärmebehandlung miteinander verklebt und durch längeres Erhitzen die flüchtigen Pyrolyseprodukte des Klebstoffs vollständig entfernt. Trotz des hohen Aufwands kann man aber das Ablösen der Folie nicht mit Sicherheit verhindern, da die Haftfestigkeit der Folie an der Filzschicht vor allem wegen ihrer - schlechten Benetzbarkeit nicht sehr groß ist und bereits kleine Gasreste und auch durch Temperaturänderungen ausgelöste Scherspannungen häufig zur Ablösung der Graphitfolie führen.

Der Erfindung liegt daher die Aufgabe zugrunde,eine aus Kohlenstoffilz und Graphitfolien bestehende Wärmeisolierung zu schaffen, deren Komponenten eine feste Verbindung bilden, die sich bei thermischer Belastung der Isolierung nicht voneinander lösen.

Die Aufgabe wird mit einer Wärmeisolierung der eingangs genannten Art gelöst, deren Graphitfolie mit Durchbrechungen versehen ist.

Der Erfindung liegt die Erkenntnis zugrunde, daß die beim Betrieb der Wärmeisolierung in der Folie und der Klebeschicht freigesetzten für die Haftung der Komponenten schädlichen Gase durch die Durchbrechungen abgeführt werden, so daß sich kein größerer, eine Ablösung der Folie bewirkender Gasdruck aufbauen kann. Die vergleichsweise rauhen Ränder der Durchbrechungen sind zudem ein guter Haftgrund für den Kleber, und bewirken vor allem einen Anstieg der Scherfestigkeit der Verbindung. Form und Größe der Durchbrechungen sind von geringerer Bedeutung als ihre Anzahl, so daß man zur Herstellung der Durchbrechungen zweckmäßig einfache Stanzwerkzeuge, wie etwa Nadeln mit kreisförmigem Querschnitt verwendet. Die Anzahl der Durchbrechungen sollte mit der Belastung der Klebeflächen zunehmen, d.h. mit der Menge der beim Erhitzen freigesetzten Gase und der Größe der mechanischen Spannungen. Besonders vorteilhaft sind 5 bis 70 lochförmige Durchbrechungen pro Quadratzentimeter mit einem Lochdurchmesser von 0,05 bis 0,5 mm. Durchbrechungen mit kleinerem Durchmesser, besonders unterhalb etwa 0,03 mm verstopfen sich häufig durch den bei der Pyrolyse des Klebers gebildeten Koks und tragen somit nicht zum Abbau des Gasüberdrucks bei. Größere Durchbrechungen schwächen die Folie mechanisch, erschweren ihre Handhabung und erleichtern das Eindringen der Ofenatmosphäre in die Kohlenstoffilzschicht der Wärmeisolierung. Beschädigungen des Kohlenstoffilzes und eine Beeinträchtigung ihrer Standzeit in Verbindung mit der gasdurchlässigen Folie durch die Ofenatmosphäre, Schmelzspritzer und dgl. wurden jedoch nicht beobachtet.

Zur Herstellung der Wärmeisolierung werden handelsübliche etwa 0,2 bis 1,0 mm dicke Graphitfolien oder aus mehreren miteinander verklebten Folien gebildete Laminate mit einer Rohdichte von ca. 0,8 bis 1,5 g/cm³ beispielsweise mit Hilfe von Nadelwalzen perforiert. Die Folie reißt an den Durchbruchstellen auf und es werden mehr oder weniger lappige, sich von der Oberfläche der Folien weg erstreckende Ausstülpungen gebildet, die ein vorzüglicher Haftgrund für die Klebeschicht sind. Die aus Kohlenstoffasern bestehende Isolierschicht enthält Gewebe oder Gelege, aus Kohlenstoffasern, besonders aber Kohlenstoffilz. Unter dem Begriff Kohlenstoffasern sind auch Graphitfasern zu verstehen und Graphitfasern enthaltende Gebilde. Der Wärmewiderstand der Faserschichten wird durch Änderung der Schichtdicke und/oder ihrer Rohdichte den jeweiligen Verwendungsbedingungen angepaßt. Größere Schichtdicken erzeugt man zweckmäßig durch Verkleben mehrerer dünner Filzbahnen. Besonders geeignet sind Kohlenstoffilze mit Dicken von 5 bis 40 mm und Rohdichten von 0,1 bis 0,3 g/cm³. Gegebenenfalls kann die Strukturstabilität der Filzbahn in bekannter Weise durch Imprägnierung des Filzes mit Pech oder einem Duroplasten und anschließender Pyrolyse des Imprägniermittels erhöht werden. Zum Verbinden der Graphitfolie mit der kohlenstoffaserhaltigen Isolierschicht werden jeweils die sich berührenden Flächen beider Komponenten der Wärmeisolierung mit einem Klebstoff, zweckmäßig aus der Gruppe Pech oder einem Duroplasten beschichtet, die gegebenenfalls mit Löse-oder Verdünnungsmitteln versetzt sind. Beispiele geeigneter Duroplaste sind Phenolformaldehydharze, Furanharze und Gemische dieser Stoffe mit einer Viskosität von etwa 1 Pa • s. Zweckmäßig wird der Klebstoff mit einer Spritzpistole oder durch Pinseln aufgetragen; seine Menge ist dabei derart zu bemessen, daß die Graphitfolie mit einer geschlossenen Klebstoffschicht bedeckt ist. Graphitfolie und kohlenstoffaserhaltige Schicht werden dann aufeinandergelegt und gegebenenfalls unter Druck von einigen kPa erwärmt, zunächst bei der Verwendung von Duroplasten auf ihre Härtungstemperatur von etwa 120 bis 200 °C und daran anschließend zur Carbonisierung des Klebers auf etwa 800 °C, mindestens aber auf die Anwendungstemperatur der Wärmeisolation. Die Wärmebehandlung erfolgt in einer inerten oder reduzierenden Atmosphäre, die Aufheizgeschwindigkeit ist wegen der geringen Dicke der Klebstoffschicht nicht kritisch.

Enthält die Wärmeisolation mehrere Graphitfolien, ist jede der Graphitfolie mit Durchbrechungen zu versehen. Die aus Isolationsschicht und Graphitfolie bestehende Wärmeisolierung kann man in weiten Grenzen der Form der zu isolierenden Räume anpassen. Besonders bei kleineren Abmessungen ist eine einstückige Ausführung der Wärmeiso lierung von Vorteil, die den Konturen etwa einer Ofenwand folgt und sich an dieser abstützt.

Verglichen mit bekannten, aus Graphitfolie und Kohlenstoffilz gebildeten Anordnungen zur Wärmeisolation weist die erfindungsgemäße Ausführung eine Reihe von Vorteilen auf. Die Haftung zwischen Graphitfolie und Kohlenstoffilz ist wesentlich besser, so daß Ablösungen durch Blasenbildung oder Delamination bei der üblichen Belastung der Wärmeisolation nicht auftreten. Die Durchbrechungen der Graphitfolie fördern auch die Entgasung der Filzschicht, so daß in Vakuumöfen die zur Einstellung eines bestimmten Unterdrucks nötige Pumpzeit kleiner ist als bei der Verwendung von bekanntem Wärmeisoliermaterial. Andererseits wird die Schutzwirkung der Graphitfolie für die Isolierschicht aus Filz durch die Durchbrechungen nicht beeinträchtigt, es gibt keine Verstaubungen des Filzes durch Reibungsverschleiß oder Schmelzespritzer.

Die Erfindung wird im folgenden anhand einer Zeichnung und von Beispielen erläutert.

In der Fig. ist eine Wärmeisolierung dargestellt, die aus einer Isolierschicht 3 aus Kohlenstoffilz und der Graphitfolie 1 besteht, die miteinander durch die carbonisierte Kleberschicht 4 verbunden sind. Die Graphitfolie ist zur Ableitung gasförmiger Produkte mit einer Vielzahl von Durchbrechungen 2 versehen.

Beispiel 1

Filzbahnen aus Kohlenstoffilz mit den Maßen 1000 × 500 × 40 mm und einer Rohdichte von 0,16 g/cm³ wurden mit flexiblen Graphitfolien, Dicke - 0,35 mm, Rochdichte - 1,0 g/cm³, verklebt. Die Folien waren zuvor mit einer Nadelwalze perforiert worden, die Anzahl der Durchbrechungen betrug ca. 50 pro Quadratzentimeter, ihr Durchmesser 0,2 bis 0,3 mm. Als Kleber wurde ein handelsübliches Phenolformaldehyd-Harz mit einer Viskosität bei Raumtemperatur von etwa 1 Pa • s auf die Kontaktflächen aufgetragen; Filzbahn und Graphitfolie wurden zusammengedrückt und zur Härtung des Harzes unter einem Druck von ca. 0,1 mPa auf 180 °C erhitzt. Die Verweilzeit betrug 3 h. Die Anordnung wurde dann unter Schutzgas mit einem mittleren Temperaturgradienten von 50 K/h auf 1000 °C und mit einem mittleren Gradienten von etwa 200 K/h auf 2500 °C erhitzt.

Das Wärmedämmungsvermögen der erzeugten Wärmeisolierung unterscheidet sich nicht von Wärmeisoliermaterialien, die Kohlenstoffilzschichten gleicher Dicke und Rohdichte enthalten und mit gasdichten Graphitfolien ausgerüstet sind. In vergleichenden Versuchen in Sinteröfen bei Temperaturen bis 1500 °C gab es bei den beispielsgemäß hergestellten Wärmeisolierungen kein Versagen durch vollständiges oder teilweises Ablösen der Graphitfolie von der Isolierschicht aus Kohlenstoffilz, durch Erosion des Filzes oder dessen Zerstörung durch Oxidation.

Beispiel 2

Filzbahnen aus Kohlenstoffilz mit einer Dicke von 20 mm und einer Rohdichte von 0,11 g/cm³, die eine vergleichsweise geringe Steifigkeit haben, wurden zur Abschirmung und Versteifung mit einer Laminatschicht verklebt, die aus zwei miteinander verklebten Graphitfolien mit einer Dicke von je 1 mm bestehen. Die Laminatschichten enthielten pro Quadratzentimeter 25 Durchbrechungen mit einem Durchmesser 0,3 bis 0,4 mm. Zum Verkleben der beiden Komponenten wurde zwischen die Kontaktflächen eine 2,1 mm dicke Polyethylen-Folie eingelegt und der Stapel unter einem Druck von 0,12 MPa in einer Stickstoffatmosphäre mit einem Gradienten von 50 K/h auf 260 °C und von 150 K/h auf 1600 °C erhitzt. Die erhaltene Wärmeisolierung ist selbsttragend, in Vergleichsversuchen gab es keine Trennung von Laminat und Filzschicht.

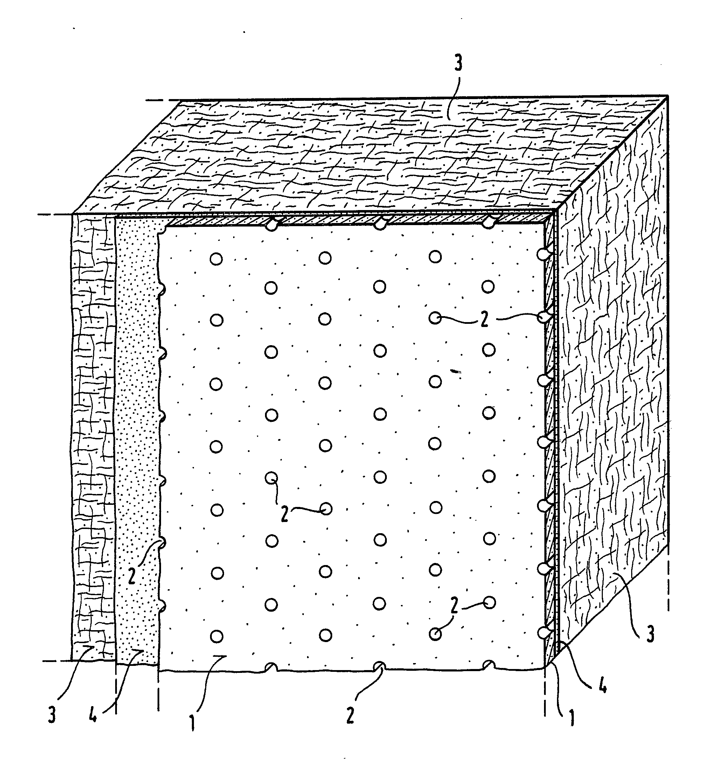

**Ansprüche**

1. Wärmeleisolierung für die Verwendung in einer nichtoxidierenden Atmosphäre mit mindestens einer aus Kohlenstoffasern gebildeten Isolierschicht und einer fest mit der Isolierschicht verbundenen Graphitfolie,
dadurch gekennzeichnet,
daß die Graphitfolie mit Durchbrechungen versehen ist.

2. Wärmeisolierung nach Patentanspruch 1,
dadurch gekennzeichnet,
daß die Graphitfolie 5 bis 70 lochförmige Durchbrechungen pro Quadratzentimeter enthält.

3. Wärmeisolierung nach den Patentansprüchen 1 und 2,
dadurch gekennzeichnet,
daß der Durchmesser der lochförmigen Durchbrechungen 0,05 bis 0,5 mm beträgt.

4. Wärmeisolierung nach den Patentansprüchen 1 bis 3,
dadurch gekennzeichnet,
daß die Dicke der Isolierschicht 5 bis 40 mm beträgt.

5. Wärmeisolierung nach den Patentansprüchen 1 bis 4,
dadurch gekennzeichnet,
daß die Rohdichte der Isolierschicht 0,1 bis 0,3 g/cm³ beträgt.

6. Wärmeisolierung nach den Patentansprüchen 1 bis 5,
dadurch gekennzeichnet,
daß die Dicke der Graphitfolie 0,2 bis 1,0 mm beträgt.

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| D,Y | DE-A-2 853 397 (KUREHA KAGAKU KOGYO K.K.) <br> * Ansprüche 1-17 * | 1-6 | B 32 B 18/00 <br> F 16 L 59/02 <br> F 27 D 1/00 // <br> C 04 B 35/52 |
| | --- | | |
| Y | DE-A-2 228 826 (THE GOODYEAR TIRE & RUBBER CO.) <br> * Ansprüche 1,11; Seiten 1,2 * | 1,2,4-6 | |
| | --- | | |
| Y | DE-A-1 696 494 (SIGRI ELEKTROGRAPHIT) <br> * Ansprüche 1,3; Seite 2, Zeilen 6,7 * | 3 | |
| | --- | | |
| A | DE-A-3 307 090 (SIGRI ELEKTROGRAPHIT) <br> * Seite 5, Zeilen 10-13; Seite 6, Beispiel 3 * | 1-6 | |
| | ----- | | RECHERCHIERTE SACHGEBIETE (Int. Cl.4) |
| | | | B 32 B <br> C 04 B <br> F 16 L <br> F 27 D |

Der vorliegende Recherchenbericht wurde für alle Patentansprüche erstellt.

| Recherchenort | Abschlußdatum der Recherche | Prüfer |
|---|---|---|
| DEN HAAG | 06-02-1987 | SCHURMANS H.D.R. |